# FASCICULE DE BREVET EUROPEEN

(11) **EP 2 064 113 B1**
(45) Date de publication et mention de la délivrance du brevet: **13.01.2010**
(21) Numéro de dépôt: 07823754.2
(22) Date de dépôt: 30.08.2007
(51) Int. Cl.: B64C 1/06, B64C 1/12

(54) **RAIDISSEUR AUTOSTABILISE**
SELBSTSTABILISIERTE VERSTEIFUNG
SELF-STABILISED STIFFENER

(30) Priorité: 21.09.2006 FR 0653880
(43) Date de publication de la demande: 03.06.2009
(73) Titulaire: AIRBUS France, 31060 Toulouse (FR)
(72) Inventeur: FORZAN, Mathieu, 31100 Toulouse (FR); BERNADET, Philippe, 31770 Colomiers (FR)
(74) Mandataire: Marconnet, Sébastien
(86) Numéro de dépôt international: PCT/FR2007/051855
(87) Numéro de publication internationale: WO 2008/034988

(56) Documents cités:
- EP-A1- 1 439 121
- WO-A-02/098733
- DE-A1- 2 642 523

## Description

### Domaine de l'invention

L'invention concerne un raidisseur permettant à la fois un raidissement stable d'une structure et une reprise d'éléments sur cette structure. L'invention concerne également une structure d'aéronef comportant au moins un tel raidisseur.

L'invention trouve des applications dans le domaine de la mécanique des structures et, en particulier, dans le domaine de l'aéronautique pour la tenue mécanique des éléments structuraux d'un aéronef.

### Etat de la technique

Dans un aéronef, il existe de nombreux éléments structuraux qui nécessitent l'utilisation de pièces supplémentaires pour améliorer la tenue mécanique de ces éléments de structure. Ces pièces supplémentaires peuvent être, notamment, des raidisseurs. Ces raidisseurs sont des pièces profilées fixées sur des éléments structuraux de l'aéronef, par exemple pour transférer des charges sens long ou pour stabiliser ces éléments (pour empêcher ces éléments de cloquer ou de flamber sous l'effet de forces de cisaillement ou de compression). Un tel raidisseur est connu de DE-2 642 523, qui est considéré comme l'état de la technique plus proche.

Les raidisseurs peuvent être utilisés, par exemple, dans le fuselage de l'aéronef en tant que cadres ou lisses pour raidir la peau et certaines zones spécifiques telles les encadrements de portes. Ils peuvent aussi être utilisés dans la voilure de l'aéronef, dans le sens de l'envergure (longerons) ou dans le sens de la corde (nervures).

Les raidisseurs peuvent raidir la structure localement, dans le sens vertical ou dans le sens longitudinal, à des emplacements où les contraintes sont importantes.

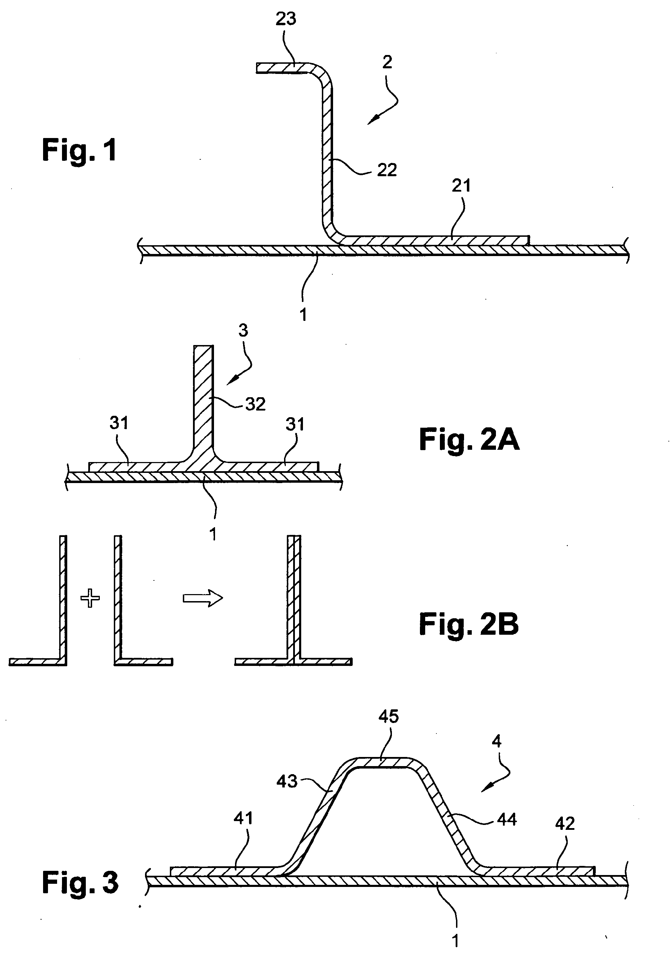

Les raidisseurs peuvent avoir des sections de formes différentes. La section du raidisseur dépend de multiples paramètres tels que la forme de l'élément structurel à raidir ou la fonction principale qu'il doit remplir. Les raidisseurs connus présentent généralement une section en Z, une section en T, une section en J ou une section en Ω. Des exemples de différentes sections connues sont représentées sur les figures 1, 2 et 3.

Plus précisément, un exemple de raidisseur à section en Z est représenté sur la figure 1. Un tel raidisseur 2 en Z comporte 3 parties : une semelle 21, une âme 22 et une tête 23. La semelle 21 est en contact avec l'élément à raidir 1 et épouse donc sa forme. L'âme 22, qui présente deux surfaces "planes" peut servir éventuellement à reprendre d'autres éléments. La tête 23 sert à stabiliser le raidisseur, c'est à dire à empêcher sa section de déverser dans son plan.

Sur la figure 2A, on a représenté un exemple de raidisseur à section en T. Ce raidisseur 3 en T comporte deux parties : une semelle 31 et une âme 32. La semelle 31 est en contact avec l'élément à raidir et épouse donc sa forme. L'âme 32, qui présente deux surfaces "planes" peut servir éventuellement à reprendre d'autres éléments. En composite, un tel raidisseur pourrait, par exemple, être obtenu par la technologie RTM (Resin Transfert Moulding) en co-injectant deux préformes en L positionnées dos à dos, comme montré sur la figure 2B.

Dans ces deux exemples de raidisseurs, de même que pour un raidisseur à section en J, le raidisseur comporte une âme formant une surface d'appui. On appelle surface d'appui, une surface plane normale ou quasi-normale à l'élément à raidir et pouvant recevoir un élément complémentaire de sorte que cet élément soit en contact permanent avec la surface d'appui. Ainsi, une telle surface d'appui peut assurer la reprise d'un autre élément, structurel ou non. Autrement dit, ces types de raidisseurs à section en J, T ou Z comportent chacun une surface plane sur laquelle peut être rapporté un élément supplémentaire.

Cependant, la forme de ces raidisseurs peut présenter un inconvénient lorsque la structure est soumise à certaines forces. En effet, lorsque le raidisseur est chargé en compression, il a tendance à déverser, c'est-à-dire qu'il a tendance à flamber à partir d'un certain niveau de compression. Pour éviter le flambage du raidisseur, il est nécessaire d'ajouter des pièces supplémentaires telles que des clips de stabilisation, placées en travers du raidisseur, dont le rôle est d'éviter que leur chargement ne déverse.

Pour résoudre ces problèmes de stabilité, il existe des raidisseurs à section en Ω. Un exemple d'un tel raidisseur en Ω est représenté sur la figure 3. Dans l'exemple de la figure 3, ce raidisseur 4 a une forme en Ω. Il comporte une tête 45, deux âmes 43 et 44 et deux semelles 41 et 42, symétriques de part et d'autre du plan médian de la tête 45. La forme même du raidisseur, et en particulier le fait qu'associé à l'élément à raidir, la section obtenue est fermée, section assimilable à une poutre creuse, offre une stabilité audit raidisseur. Autrement dit, le raidisseur est stable par lui-même, sans ajout d'aucune pièce supplémentaire. Il est auto stabilisé. Ainsi, même si l'on charge un tel raidisseur en compression, on comprend bien que le raidisseur ne déverse ni d'un côté, ni de l'autre.

Cependant, un tel raidisseur en Ω ne comporte aucune surface d'appui simple adaptée à la reprise d'autres éléments. En effet, outre ses deux semelles, un tel raidisseur n'a aucune surface réellement adaptée à la reprise d'autres éléments de par l'orientation de sa tête et de ses âmes (aucune n'est normale à la surface de l'élément à raidir) et de par les problématiques associées à l'installation de fixation dans des sections fermées (contrôlabilité, fixations spécifiques, ...).

Ainsi, selon l'élément structurel à raidir et selon les fonctions à assurer, on choisit d'utiliser un raidisseur à surface d'appui, comme un raidisseur avec une section en Z, en T ou en J, ou un raidisseur auto stabilisé, comme le raidisseur à section en Ω.

Or, la tendance actuelle en aéronautique fait qu'il y a toujours plus d'éléments à reprendre, aussi bien des éléments d'équipement que des éléments de système. En particulier sur le fuselage d'un aéronef, les cadres ou la structure plancher sont des zones de l'aéronef où il y a de nombreux éléments à reprendre, aussi bien des éléments de structure que des éléments de système tels que les câbles électriques. Il est donc important de permettre une reprise d'éléments sur les raidisseurs tout en simplifiant au maximum les pièces de structure par intégration de fonctions.

### Exposé de l'intention

L'invention, telle que définie par les caractéristiques de la revendication 1, a justement pour but de remédier aux inconvénients des techniques exposées précédemment. A cette fin, l'invention propose un raidisseur ayant une section lui permettant à la fois d'être auto stabilisé et d'assurer une reprise d'éléments. Un tel raidisseur se suffit à lui-même pour la tenue mécanique et offre une âme plane permettant une reprise d'élément. Pour cela, le raidisseur de l'invention comporte une partie basse ayant une forme assimilable, en stabilité, à un Ω et une partie haute présentant une surface d'appui permettant la reprise d'éléments.

De façon plus précise, l'invention concerne un raidisseur pour une structure soumise à des contraintes de tension et/ou de compression et/ou de cisaillement, **caractérisé en ce qu**'il comporte une section en forme de λ comprenant :
- une zone en contact avec un élément à raidir ayant une section fermée et assurant une stabilité, cette zone comportant une première et une seconde jambes, et
- une âme normale à l'élément à raidir, lui conférant une surface d'appui apte à une reprise d'élément, cette âme étant formée par l'une des deux jambes.

Le raidisseur de l'invention peut comporter également une ou plusieurs des caractéristiques suivantes :
- le raidisseur est réalisé en matériau composite.
- la première jambe est une longue jambe, la seconde jambe est une courte jambe, les deux jambes se rejoignant en une zone de jonction formant une surépaisseur.
- l'âme (12) est constituée par une partie de la longue jambe (6).
- la courte jambe est symétrique à la longue jambe par rapport à un axe XX passant par la zone de jonction.
- chaque jambe comporte une semelle de stabilisation.
- la longue jambe a une section en C.
- la longue jambe a une section en Z.
- la courte jambe a une section en L.
- la longue jambe (6) comporte une tête (64) formée à une extrémité opposée à la semelle de stabilisation (63), assurant une inertie.

L'invention concerne également une structure d'aéronef, caractérisée par le fait qu'elle comporte au moins un raidisseur tel que défini précédemment.

L'invention concerne également un aéronef comportant au moins un de ces raidisseurs.

### Brève description des dessins

La figure 1, déjà décrite, représente un raidisseur à section en Z.
Les figures 2A et 2B, déjà décrites, représentent un raidisseur à section en T.
La figure 3, déjà décrite, représente un raidisseur à section en Ω.
La figure 4 représente une première configuration d'un raidisseur à section en λ selon l'invention.
La figure 5 représente une seconde configuration d'un raidisseur à section en λ selon l'invention.
Les figures 6A et 6B, qui sont associées à la configuration de la figure 5, montrent les centres de gravité de raidisseurs à section en λ selon l'invention.
La figure 7 représente un exemple de cadre selon l'invention et de traverses de plancher dans un fuselage d'aéronef.
Les figures 8A et 8B montrent les détails de la liaison cadre/traverse illustrée précédemment à la figure 3.

### Description détaillée de modes de réalisation de l'invention

L'invention concerne un raidisseur pour élément structurel, en particulier d'aéronef, ayant une section en forme de λ. Cette forme en λ permet à la fois une auto stabilité du raidisseur et une reprise d'éléments.

Une section en λ, telle qu'elle va être décrite, peut être par exemple appliquée à un raidisseur longitudinal, c'est-à-dire une lisse, ou bien à un raidisseur radial, c'est à dire un cadre.

Un raidisseur à section en λ combine les avantages des raidisseurs auto stabilisés, décrits précédemment, et des raidisseurs adaptés à la reprise d'éléments, également décrits précédemment. Pour cela, un raidisseur à section en λ comporte une partie basse ayant deux points d'appui assurant une auto stabilité et une partie haute ayant une surface d'appui assurant une reprise d'éléments. La partie basse est une zone en contact avec l'élément à raidir ; elle a une section fermée. La partie haute comporte l'âme 12 du raidisseur ; cette âme est normale à l'élément à raidir.

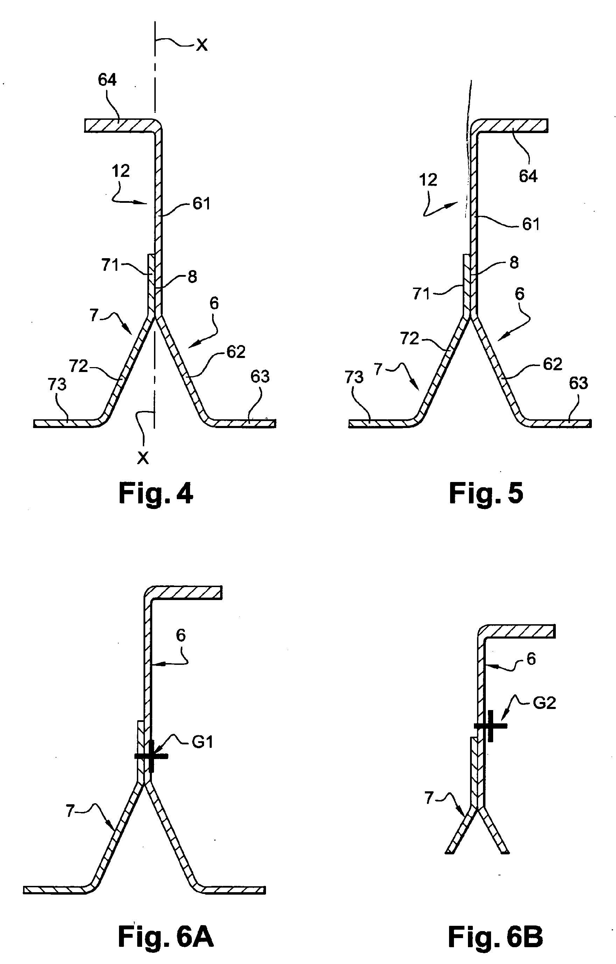

Des exemples de raidisseurs à section en λ sont représentés sur les figures 4 et 5. Plus précisément, la figure 4 montre une première configuration de section d'un raidisseur en λ selon l'invention. Cette section de raidisseur en λ, appelé plus simplement raidisseur en λ, comporte une longue jambe 6, appelée aussi grande jambe, et une courte jambe 7, appelée aussi petite jambe. La petite et la grande jambes sont réalisées dans des matériaux identiques. Elles ont, de préférence, une épaisseur identique au moins sur une partie de la longueur de la jambe.

La petite jambe 7 rejoint la grande jambe 6 en une zone de jonction 8 formant, à cet emplacement, une surépaisseur.

La grande jambe 6 est la jambe principale du raidisseur. La petite jambe 7 est le stabilisateur du raidisseur.

Chaque jambe comporte plusieurs secteurs. La petite jambe 7 comporte un premier secteur 71 situé dans la zone de jonction 8 des deux jambes. Elle comporte un deuxième 72 formant un angle obtus avec le premier secteur 71. Elle comporte un troisième secteur 73, appelé semelle, et dont le rôle est de permettre la liaison entre le raidisseur et l'élément à raidir. Cependant, localement, ce troisième secteur peut être absent de la jambe du raidisseur, ceci afin d'en limiter sa masse.

La grande jambe 6 comporte un premier secteur 61, accolé au premier secteur 71 de la petite jambe 7. Le premier secteur de la grande jambe 6 est de longueur supérieure à celui de la petite jambe 7 et constitue une surface d'appui 61 pour reprendre d'éventuelles autres structures (traverses, ...). Ce secteur 61 de la grande jambe 6 constitue l'âme 12 du raidisseur. La grande jambe 6 comporte un deuxième secteur 62 formant un angle obtus avec le premier secteur 61. La grande jambe 6 comporte aussi un troisième secteur 63 formant une semelle dont le rôle est de permettre la liaison entre la raidisseur et l'élément à raidir. Cependant, localement, ce troisième secteur peut-être absent de la jambe du raidisseur, ceci afin d'en limiter sa masse.

La petite jambe 7 est symétrique à la grande jambe 6 par rapport à un axe XX passant par la zone de jonction.

La grande jambe 6 comporte, de plus, un quatrième secteur 64 formant un angle sensiblement droit avec le premier secteur 61 de sorte que ledit quatrième secteur est plan. Ainsi, le quatrième secteur 64, aussi nommé tête, contribue à augmenter l'inertie du raidisseur. A cette fin, ce quatrième secteur 64 peut avoir une épaisseur supérieure à celle des autres secteurs de la grande jambe 6.

A titre d'exemple, un raidisseur de section λ peut avoir une hauteur totale de 110 millimètres avec des jambes d'une épaisseur de 2,6 mm, excepté le quatrième secteur 64 de la grande jambe qui a une épaisseur de 5 mm. La zone de jonction des deux jambes a alors une surépaisseur de 5,2 mm. Cette zone de jonction 8 peut avoir, par exemple, une longueur de 24 mm.

Un raidisseur en λ a une stabilité aussi performante qu'un raidisseur en Ω lorsqu'on considère les zones où il est en contact avec l'élément à raidir, c'est à dire les zones où ses jambes comportent leurs troisièmes secteurs 63 ou 73. En effet, dans ces zones, le raidisseur associé à l'élément à raidir permet d'obtenir une section fermée.. Du fait de sa stabilité, un tel raidisseur en λ, peut subir un chargement en tension, en compression et en cisaillement, tout en assurant une reprise d'éléments.

Dans la configuration représentée sur la figure 4, les secteurs de la grande jambe 6 forment sensiblement un Z. On dit que la grande jambe a une section en Z. Les secteurs de la petite jambe forment sensiblement un L retourné. On dit que la petite jambe a une section en L.

Dans la configuration représentée sur la figure 5, les secteurs de la grande jambe 6 forment sensiblement un C. On dit que la grande jambe a une section en C. Les secteurs de la petite jambe forment sensiblement un L retourné. On dit que la petite jambe a une section en L.

La différence entre les deux configurations réside dans l'orientation du secteur 64 : côté grande jambe 6 ou côté petite jambe 7. Le choix de la configuration du raidisseur en λ dépend de la forme et de l'orientation de l'élément à rapporter sur la surface d'appui 61 du raidisseur.

Quelle que soit la configuration du raidisseur en λ selon l'invention, les deux jambes du raidisseur sont réalisées dans un même matériau. Ce matériau peut être du métal. Ce matériau peut aussi être un matériau composite qui présente l'avantage que les deux jambes du lambda peuvent être intégrées l'une à l'autre lors de la fabrication du raidisseur. Il n'y a alors aucune application mécanique nécessaire pour joindre les deux jambes du raidisseur. Par exemple, la grande jambe et la petite jambe du λ peuvent être co-injectées ou bien co-cuites, etc. Dans ce cas, après un dimensionnement approprié du raidisseur, il n'y a aucun risque de séparation des deux jambes sous l'effet des forces appliquées à l'élément structurel.

Dans un mode de réalisation préféré de l'invention, les deux jambes du raidisseur sont réalisées à partir de deux préformes sèches qui sont moulées toutes deux en même temps dans un même moule, par exemple selon un procédé RTM (Moulage par transfert de résine). Ainsi, le fait de co-injecter les deux jambes du raidisseur permet d'obtenir une pénétration entre les deux jambes au niveau de la zone de jonction. Le raidisseur de l'invention peut être réalisé à partir de tissus de fibres, c'est-à-dire des fibres tissées selon une trame et une chaîne, ou de nappes de fibres, c'est-à-dire des fibres suivant une seule direction. Le choix du type de fibres dépend des forces que doit supporter le raidisseur.

Sur les figures 6A et 6B, on a représenté un raidisseur en λ selon la configuration de la figure 5 en zone de reprise sur l'élément à raidir (avec semelle figure 6A) et hors zone de reprise avec l'élément à raidir (sans semelle figure 6B). Ces figures 6A et 6B montrent le centre de gravité du raidisseur, pour chaque zone dudit raidisseur. On remarque que, quel que soit la zone, le centre de gravité n'est jamais localisé sur le raidisseur mais en est extrêmement proche. Dans le cas de la figure 6A, le centre de gravité G1 est juste à côté de la grande jambe 6 du raidisseur, en dehors du raidisseur. Dans le cas de la figure 6B, le centre de gravité G2 est complètement extérieur au raidisseur. La proximité du centre de gravité du raidisseur avec son âme est une caractéristique du raidisseur qui contribue à lui donner son caractère auto-stabilisant.

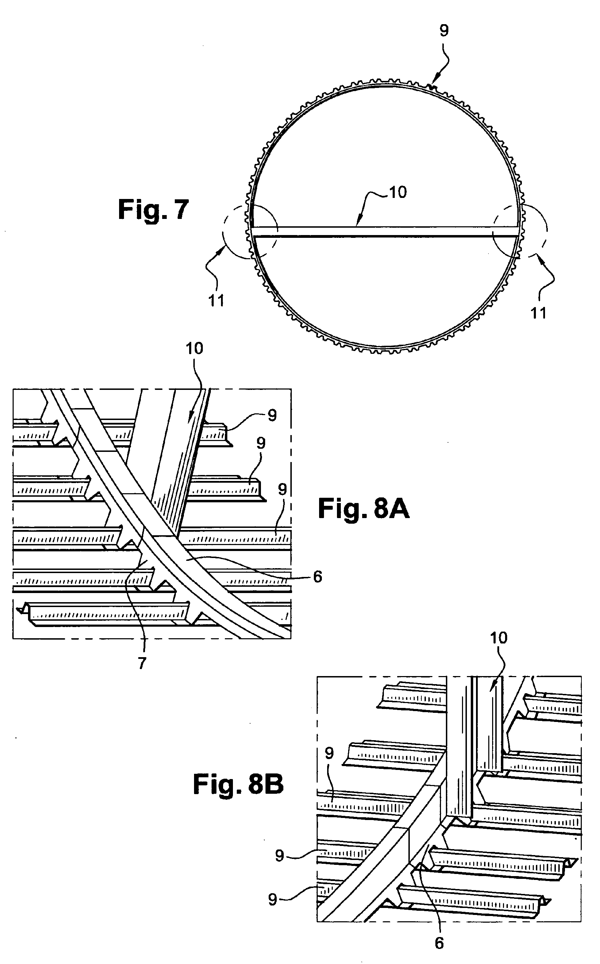

Sur la figure 7, on a représenté un exemple de cadre de fuselage d'aéronef modélisé selon le raidisseur de l'invention, ceci permettant d'assurer la reprise d'éléments de la structure plancher (ici une traverse) tout en ayant un cadre stable. En aéronautique, il est complexe de construire un cadre, de section ronde ou ovale, d'une seule pièce. On construit donc, généralement, un cadre à partir de plusieurs secteurs éclissés les uns à la suite des autres. Ces secteurs sont des exemples d'éléments structurels qui peuvent être envisagés en tant que raidisseurs selon l'invention. Dans l'exemple de la figure 7, on construit un cadre 9 de 360° selon le raidisseur de l'invention, ceci permettant l'accroche sur ce cadre 9 d'une traverse de plancher 10 dans deux zones de jonction 11.

La liaison entre cadre selon l'invention et traverse de la figure 7 est représentée plus en détail sur les figures 8A et 8B. Comme expliqué précédemment, le cadre 9 a une section en forme de λ. Il comporte donc, sur toute sa longueur, plusieurs petites jambes 7 et plusieurs grandes jambes 6, comme montré sur les figures 8A et 8B. Dans l'exemple montré sur les figures 8A et 8B, la traverse de plancher 10 est en appui contre la grande jambe 6 du raidisseur. Dans ce cas, le raidisseur est du type montré sur la figure 4, c'est-à-dire qu'il a une grande jambe 6 en forme de Z. Ce type de raidisseur, dans l'exemple des figures 8A et 8B, permet une reprise de la traverse plancher plus facile du fait de l'orientation de la tête 64 du raidisseur. La surface d'appui 61 de la grande jambe 6 permet de recevoir un ou plusieurs autres éléments.

Dans l'exemple des figures 8A et 8B, le cadre vient se reprendre directement sur les semelles de lisses. On dit que le cadre est semi-flottant. Dans d'autres configurations, le cadre peut être non-flottant (reprise directe du cadre sur la peau du fuselage et éventuellement aussi sur les semelles de lisses) ou flottant (pas de reprise directe du cadre sur la peau raidie, la liaison entre peau et cadre se faisant par l'intermédiaire de clips),

## Revendications

1. Raidisseur pour une structure soumise à des contraintes de tension et/ou de compression et/ou de cisaillement, **caractérisé en ce qu'**il comporte une section en forme de λ comprenant :
- une zone (63, 73) apte à être en contact avec un élément à raidir (9) ayant une section fermée et assurant une stabilité, ce raidisseur comportant une première (6) et une seconde jambes (7) qui se rejoignent en une zone de jonction (8) formant une surépaisseur, la première jambe étant une longue jambe (6), la seconde jambe étant une courte jambe (7),et
- une âme (12) normale à la zone (63, 73) apte à être en contact avec l'élément à raidir (9), lui conférant une surface d'appui (61) apte à une reprise d'élément, cette âme étant formée par l'une des deux jambes.

2. Raidisseur selon la revendication 1, **caractérisé en ce qu'**il est réalisé en matériau composite.

3. Raidisseur selon la revendication 1 ou 2, **caractérisé en ce que** l'âme (12) est constituée par une partie de la longue jambe (6).

4. Raidisseur selon l'une quelconque des revendications 1 à 3, **caractérisé en ce que** la petite jambe (7) jusqu'à la zone de jonction (8) est symétrique à la longue jambe (6) par rapport à un axe (XX) passant par la zone de jonction (8).

5. Raidisseur selon l'une quelconque des revendications 1 à 4, **caractérisé en ce que** chaque jambe comporte une semelle de stabilisation (63, 73).

6. Raidisseur selon l'une quelconque des revendications 1 à 5, **caractérisé en ce que** la longue jambe a une section en C.

7. Raidisseur selon l'une quelconque des revendications1 à 5, **caractérisé en ce que** la longue jambe a une section en Z.

8. Raidisseur selon l'une quelconque des revendications 1 à 5, **caractérisé en ce que** la courte jambe a une section en L.

9. Structure d'aéronef, **caractérisée en ce qu'**elle comporte au moins un raidisseur selon l'une quelconque des revendications 1 à 8.

10. Aéronef comportant au moins un raidisseur selon l'une quelconque des revendications 1 à 8.

## Claims

1. A stiffener for a structure submitted to tensile and/or compression and/or shear stresses, **characterised in that** it comprises a λ-shape section including:
- an area (63, 73) suitable for being in contact with an element to be stiffened (9) with a closed section and providing stability, this stiffener comprising a first (6) and a second (7) leg, which come together in a junction area (8) forming an excessive thickness, the first leg being a long leg (6), the second leg being a short leg (7), and
- a core (12), normal to area (63, 73), suitable for being in contact with the element to be stiffened (9), providing a support surface (61) capable of element recovery, this core being formed by one of the two legs.

2. A stiffener according to claim 1, **characterised in that** it is made out of composite material.

3. A stiffener according to claim 1 or 2, **characterised in that** core (12) is constituted by a part of long leg (6).

4. A stiffener according to any one of claims 1 to 3, **characterised in that** small leg (7) is symmetrical to long leg (6) up to junction area (8) with respect to an axis (XX) passing via junction area (8).

5. A stiffener according to any one of claims 1 to 4, **characterised in that** each leg comprises a stabilising flange (63, 73).

6. A stiffener according to any one of claims 1 to 5, **characterised in that** the long leg has a section in C.

7. A stiffener according to any one of claims 1 to 5, **characterised in that** the long leg has a section in Z.

8. A stiffener according to any one of claims 1 to 5, **characterised in that** the short leg has a section in L.

9. An aircraft structure, **characterised in that** it comprises at least one stiffener according to any one of claims 1 to 8.

10. An aircraft comprising at least one stiffener according to any one of claims 1 to 8.

## Patentansprüche

1. Versteifung für eine Struktur, die Zugspannungen und/ oder Druckbelastungen und/ oder Schubspannungen ausgesetzt ist, **dadurch gekennzeichnet, dass** sie einen Querschnitt in λ-Form enthält, mit:
- einem Bereich (63, 73), der in der Lage ist, mit einem zu versteifenden Element (9) in Verbindung zu stehen, das einen geschlossenen Querschnitt aufweist und für eine Stabilität sorgt, wobei diese Versteifung ein erstes (6) und ein zweites Bein (7) aufweist, die einander an einer Nahtstelle (8) treffen, die ein Aufmaß darstellt, wobei das erste Bein ein langes Bein (6), und das zweite Bein ein kurzes Bein (7) ist, und
- einem Stegblech (12) normal zum Bereich (63, 73), der in der Lage ist, mit dem zu versteifenden Element (9) in Verbindung zu stehen, und ihm dabei eine Auflagefläche (61) verleiht, die in der Lage ist, ein Element aufzunehmen, wobei dieses Stegblech von einem der beiden Beine gebildet wird.

2. Versteifung nach Anspruch 1, **dadurch gekennzeichnet, dass** es aus einem Verbundmaterial gefertigt ist.

3. Versteifung nach Anspruch 1 oder 2, **dadurch gekennzeichnet, dass** das Stegblech (12) von einem Teil des langen Beines (6) gebildet wird.

4. Versteifung nach irgendeinem der Ansprüche 1 bis 3, **dadurch gekennzeichnet, dass** das kurze Bein (7) bis zur Nahtstelle (8) in Bezug auf eine Achse (XX), die durch die Nahtstelle (8) verläuft, symmetrisch zum langen Bein (6) ist.

5. Versteifung nach irgendeinem der Ansprüche 1 bis 4, **dadurch gekennzeichnet, dass** jedes Bein eine Stabilisierungssohle (63, 73) enthält.

6. Versteifung nach irgendeinem der Ansprüche 1 bis 5, **dadurch gekennzeichnet, dass** das lange Bein einen C-förmigen Querschnitt aufweist.

7. Versteifung nach irgendeinem der Ansprüche 1 bis 5, **dadurch gekennzeichnet, dass** das lange Bein einen Z-förmigen Querschnitt aufweist.

8. Versteifung nach irgendeinem der Ansprüche 1 bis 5, **dadurch gekennzeichnet, dass** das kurze Bein einen L-förmigen Querschnitt aufweist.

9. Struktur eines Luftfahrzeugs, **dadurch gekennzeichnet, dass** sie zumindest eine Versteifung nach irgendeinem der Ansprüche 1 bis 8 enthält.

10. Luftfahrzeug mit zumindest einer Versteifung nach irgendeinem der Ansprüche 1 bis 8.
